# EUROPEAN PATENT APPLICATION

(11) **EP 1 274 013 A1**
(43) Date of publication of application: **08.01.2003**
(21) Application number: 01410080.4
(22) Date of filing: 03.07.2001
(51) Int. Cl.: G06F 11/36

(54) **Process monitor module**

(71) Applicant: Hewlett-Packard Company, Palo Alto, CA 94304 (US)
(72) Inventor: Draperi, François, 38130 Echirolles (FR)
(74) Representative: Lloyd, Richard Graham

(57) **Abstract**

A process monitor module operable to monitor the operation of a process comprising an executing program comprising at least one executable file, the process monitor module being operable to
read debug information associated with the at least one executable file,
monitor a selected operation of the process identified in the debug information,
compare the selected operation with a pre-determined criterion,
and generate an output if the selected operation does not meet the predetermined criterion.

## Description

### Field of the Invention

This invention relates to a process monitor module.

### Background of the Invention

When a process comprising an executing program ceases to operate as desired, for example, resulting in the process "hanging" or otherwise malfunctioning, it is desirable that the abnormal operation is detected and remedial action be taken to deal with the resulting malfunction. A problem can arise when a process is still running at an operating system level but is not providing a normal service, where the abnormal operation of the process may be undetected by the operating system.

Conventionally, when a program comprising at least one executable file is executed on a computer comprising an operating system, the operating system establishes a process or task for the program. The process or task identifies the executing program and comprises other information used by the operating system in addition to the executing program.

During software development, it is known to run a program in a suitable debug environment where the functioning of the program and of the computer can be monitored. To permit a program to be used in such a debug environment, it is necessary to add instrumentation to the program under test. By instrumentation is meant additional software routines and data which are be added during compilation of the program, either by addition of routines to the program code and data or by linking routines from a suitable library. The provision of instrumentation adds extra code to the program which is not needed for the program's operation, thus increasing its size, and is thus not suitable for monitoring conventional operation of a process.

It is also known to provide fault tolerant software, particularly for use with clusters, which can detect hanging or other failure of a program and take remedial steps, for example by transferring operation to a different computer. Such an arrangement is only suitable for relatively complex critical systems where a very high degree of fault tolerance is required, and is hence unsuitable for monitoring conventional operation of a process.

An aim of the invention is to provide a process monitor module operable to monitor a process which reduces or overcomes the above problems.

### Summary of the Invention

According to a first aspect of the invention, we provide a process monitor module operable to monitor a process comprising an executing program comprising at least one executable file, the process monitor module being operable to
read debug information associated with the at least one executable file,
monitor a selected operation of the process identified in the debug information,
compare the selected operation with a pre-determined criterion,
and generate an output if the selected operation does not meet the predetermined criterion.

The process monitor module is preferably operable to monitor the process without modification of the program.

The process monitor module is preferably operable to monitor the process without executing the program in a debug environment.

The process monitor module may be operable to display a plurality of operations identified in the debug information such that a user may identify one or more operations to be compared with a predetermined criterion.

The predetermined criterion may be selected by the user.

The predetermined criterion may comprise a time period and a test parameter to be met by the selected operation with the time period.

The program monitor module may be operable to generate an output comprising a notification message, or an alarm transmitted to an alarm management system.

The debug information may be held in the executable file.

Alternatively, the debug information may be held in a debug information file and the executable file may comprise a pointer to the location of the debug information file, and the process monitor module may be operable to read the pointer to locate to debug information file.

### Brief Description of the Drawing

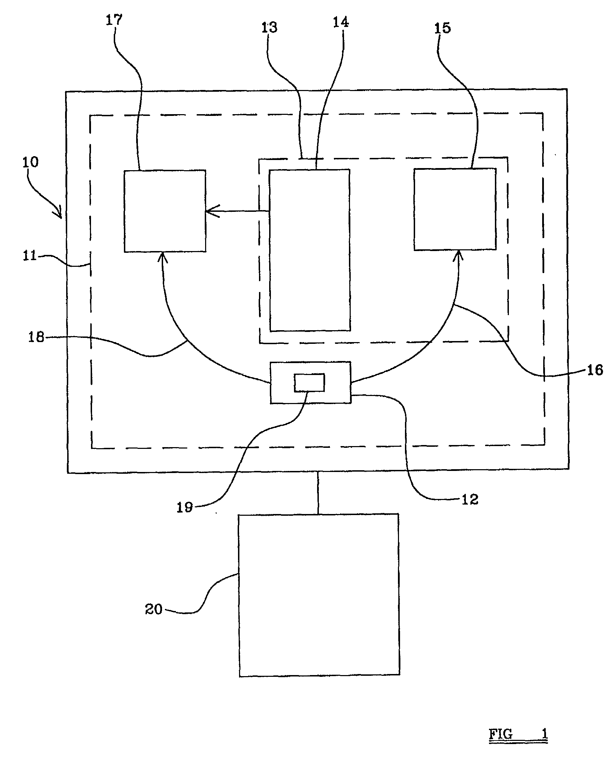

The invention will now be described by way of example only with reference to the accompanying drawing, wherein
FIGURE 1 is a diagrammatic illustration of a computer system provided with a process monitor module according to the present invention.

### Description of the Preferred Embodiments

Referring now to the Figure, a conventional computer is shown schematically at 10 and provided with a display 20. The computer 10 further comprises an operating system which provides a suitable multi-tasking environment, generally illustrated at 11. The computer is provided with a process monitor module according to the present invention generally illustrated at 12. When it is desired to execute a program comprising at least one executable file, here generally illustrated at 13, the operating system 11 establishes a process or task in conventional manner for the requested program. The process monitor module 12 is operable to monitor the process. The process monitor module 12 and the executing program comprising an executable file 13 are both run in conventional manner under the operating system 11. The process monitor module 12 itself is run as a process, or may be a module of a larger process.

When a source code file is compiled and linked an executable file 13 is generated which in the present example comprises an executable part 14. Conventionally, during compilation debug information 15 is also generated which contains information on the executable file 13. The level of information included in the debug information 15 may be set at compilation. The debug information may comprise any appropriate type of information about the executable file as required, for example, the source file name, creation date, mapping of lines in the object code and source code, information on symbol names, functions called and variables addressed by the executable file 13 whether internally or externally of the executable file 13, input and output information, or any other information as appropriate. The debugging information format, location and usage is generally dependant on the operating system and compiler/linker used.

Depending on the compiler used, the debug information may be included as part of the compiled object file, or may comprise a separate file in which case a location reference is embedded in the executable file after linking. In the present example, the debug information 15 is held in the executable file 13. However, where the debug information is held in a debug information file separately from the executable file 13, the executable file 13 contains a pointer to the location of the debug file, which may be read by the process monitor module to locate the debug information.

In the present example, the process monitor module 12 is operable to read the debug information 15 as indicated by the arrow 16. The process monitor module is then operable to display to a user the operations of the executable file 13 which are available for monitoring. It should be understood that the term "operation" is used here in a broad sense and encompasses any output or other monitorable function of the executable file 13 which produces a monitorable result, and for which an appropriate predetermined alarm criterion can be selected. An output or other monitorable function of the executable file 13 is abstractly represented at 17, and may be appropriately read or monitored by the processor monitor module 12, as represented by the arrow 18.

The output or other monitorable function 17 may comprise, for example, a memory address, a variable, a function, file or other software element to be called or addressed by the executable file 13, a device addressed by the executable file 13, or any other element of the computer 10 as may be desired and as identified in the debug information 15. Whatever the level of debug or prolite information stored in the debug information file by the compiler, some basic information will in general be available, in particular the program input/output details.

It is particularly envisaged that the process monitor module would monitor the output or other monitorable function 17 in accordance with a predetermined criterion comprising a selected time period and a test parameter to be met within the time period, for example a specified number of operations to be performed in the selected time period. The number of operations may for example comprise a minimum acceptable number of operations, or a maximum, or a desired number or range of operations to be performed in the selected time period.

Thus, during normal operation of the process providing its service without delay, the predetermined criterion will be met. However, where the process hangs or suffers an abnormal delay, for example if it is still running at system level but is running a quasi-infinite loop or is locked by an input/output operation, the number of operations performed will deviate from the predetermined criterion.

As an example of an operation, if the executable file 13 is required to increment a particular variable in a given time period, the process monitor module 12 can be set to monitor the value of the variable, reading the appropriate memory address or other appropriate information included in the debug information 15. If the test parameter of the variable being incremented within the time period set by the predetermined criterion is not met, the process monitor module 12 generates an alarm output. Alternatively, the predetermined criterion may simply be that the variable value equals, or does not equal, or vary from, a preselected value or range of values. In another example, if the executable file 13 comprises a web server program, it will be apparent that for every request received by the executable file 13, a response must be sent out. Using the input/output information contained in the debug information 15, the process monitor module 12 may be set to check that if a request is received, a response is transmitted within an appropriate time period. As a further example, if from the debug information 15 it is apparent that the executable file 13 calls a particular function, the process monitor module 12 may be set to monitor the frequency at which the function is called and generate an output for example if the function is not called, or if the function is called repeatedly, or in excess of a desired number of times set by the test parameter. As an example application, where an operation of the executable file 13 is to write to a log, the process monitor module 12 can be set to monitor that the log file is being written to, e.g. that at least one "write" function is performed in a selected time period.

The process monitor module 12 may be provided with at least one template 19 to assist the user in selecting operations of the executable file 13 which are to be monitored, and their appropriate criteria. The process monitor module 12 may also be provided with a standard set of operations which may be monitored, for example system calls, and the user's selected operations may be in addition to or in place of the standard set of operations.

The output generated by the process monitor module 12 in the present example comprises an alarm message sent to the display 20 to notify the user of the occurrence of a problem, although it will be appreciated that the output may comprise any other form of notification as desired. For example, it might be envisaged that the process monitor module 12 would be operable to send a message by email to a preselected address to notify a responsible person of the failure.

Alternatively, an alarm may be sent to an alarm management system which is operable to respond to abnormal operation of the monitored process.

A process monitor module according to the present invention is thus particularly advantageous in that it permits a process to be monitored on a continual basis, but without requiring modifications to the executing program, and also without requiring the executing program to be run in a specialised debugging environment.

The process monitor module 12 can be set to monitor only a particular aspect of the process's operation, identified from the debug information file associated with the program and selected by the user and/or in conjunction with the process monitor module 12. The process monitor module 12 can thus be a relatively small program with relatively small memory and computing time demands. Although it is clear that the process monitor module 12 might be set to perform any appropriate function in the event of a failure being detected, in the preferred example the process monitor module 12 simply generates an alarm, whether by displaying a message on a display screen or by sending a message, and so the size of the process monitor module 12 is kept to a minimum.

It will also be apparent that the process monitor module 12 can be set up to monitor a process without any knowledge of the internal operation of the executing program, and could for example just be set up to monitor the input and/or output of the program. Thus a process monitor module according the present invention is sufficiently flexible to monitor any process, regardless of the origin or nature of the executing program.

In the present specification "comprise" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A process monitor module operable to monitor a process comprising an executing program comprising at least one executable file, the process monitor module being operable to
read debug information associated with the at least one executable file,
monitor a selected operation of the process identified in the debug information,
compare the selected operation with a pre-determined criterion,
and generate an output if the selected operation does not meet the predetermined criterion.

2. A process monitor module according to Claim 1 wherein the module is operable to monitor the operation of the process without modification of the program.

3. A process monitor module according to Claim 1 or Claim 2 wherein the module is operable to monitor the operation of the process without executing the program in a debug environment.

4. A process monitor module according to any one of the preceding claims wherein the module is operable to display a plurality of operations identified in the debug information such that a user may identify one or more operations to be compared with a predetermined criterion.

5. A process monitor module according to Claim 4 wherein the predetermined criterion may be selected by the user.

6. A process monitor module according to any one of the preceding claims wherein the predetermined criterion comprises a time period and a test parameter to be met by the selected operation with the time period.

7. A process monitor module according to any one of the preceding claims wherein the process monitor module is operable to generate an output comprising a notification message.

8. A process monitor module according to any one of the preceding claims wherein the debug information is held in the executable file.

9. A process monitor module according to any one of Claims 1 to 8 wherein the debug information is held in a debug information file and the executable file comprises a pointer to the debug information file, and wherein the process monitor module is operable to read the pointer to locate the debug information file.
